Europäisches Patentamt

(19) European Patent Office

Office européen des brevets

(11) Numéro de publication: **0 088 034**
**B1**

## (12) FASCICULE DE BREVET EUROPEEN

(45) Date de publication du fascicule du brevet:
**22.04.87**

(21) Numéro de dépôt: **83420030.5**

(22) Date de dépôt: **25.02.83**

(51) Int. Cl.⁴: **B 29 C 67/20** // B26D1/547

(54) Appareil pour la découpe de blocs de mousse.

(30) Priorité: **01.03.82 FR 8203650**

(43) Date de publication de la demande:
**07.09.83 Bulletin 83/36**

(45) Mention de la délivrance du brevet:
**22.04.87 Bulletin 87/17**

(84) Etats contractants désignés:
**BE DE FR**

(56) Documents cités:
**EP - A - 0 035 852**
**DE - A - 2 112 289**
**DE - A - 2 365 350**
**DE - C - 1 289 252**
**GB - A - 805 836**
**US - A - 3 800 650**
**US - A - 4 077 301**

**"HANDBUCH DER FERTIGUNGSTECHNIK"**, Vol. 3/1,
1979 München Wien, R. REEBER "Universal
Werkzeugfräsmaschinen" pages 509 à 516

(73) Titulaire: **ROSET S.A., Briord Ain (FR)**

(72) Inventeur: **Moreau, Pierre, 10, rue de l'Orme,
F-38300 Bourgoin Jallieu (FR)**
Inventeur: **Donnadieu-Bellon, Raoul, Avenue des
Cantinières Ruy, F-38300 Bourgoin-Jallieu (FR)**
Inventeur: **Rigaud, Roger, 12, rue des Hirondelles,
F-38300 Bourgoin Jallieu (FR)**

(74) Mandataire: **Maureau, Philippe, Cabinet Germain &
Maureau Le Britannia - Tour C 20, bld Eugène Déruelle
Boîte Postale 3011, F-69392 Lyon Cédex 03 (FR)**

## Description

La présente invention a pour objet un appareil pour la découpe de blocs de mousse, et notamment de blocs de polyuréthane tels que ceux utilisés pour la réalisation de certains sièges.

De manière connue, la découpe de blocs de mousse est réalisée à l'aide d'outils faisant appel à deux principes, c'est-à-dire comprenant soit un fil tendu et chauffé dont la température est susceptible de faire fondre la mousse localement, soit un fil abrasif ou une lame ruban entraînée comme une scie à ruban ou tirée et rappelée comme une scie alternative.

Les lames et fils abrasifs sont montés sur des machines verticales ou horizontales de plus en plus automatisées, mais ayant la particularité commune que le déplacement relatif du fil et du bloc de mousse est tel que la ligne de découpe reste toujours parallèle à elle-même, ne permettant que de découper des formes cylindriques. La méthode du fil «chaud» peut recevoir le même perfectionnement en ce qui concerne son entraînement, mais ses inconvénients tels que dégagement de fumée, risque d'incencie, imprécision l'ont progressivement réservée à des utilisations spécifiques. C'est ainsi que le fil chaud est employé manuellement tendu sur arc et permet de réaliser des formes plus complexes, par exemple coniques, soit grâce à la seule habileté de l'opérateur, soit à l'aide de deux gabarits parallèles de deux formes différentes sur lesquels reposent les extrémités du fil.

La demande de brevet DE-A-2 112 289 ayant servi de base pour le préambule de la revendication 1 décrit un appareil pour la découpe de blocs de mousse comprenant un plateau sur lequel est fixé le bloc de mousse à découper, comportant vis-à-vis d'un fil chauffant horizontal porté par un étrier, trois degrés de liberté, à savoir une translation horizontale selon une direction orthogonale au fil, une translation verticale et une rotation autour de l'axe horizontal précité. Cet appareil ne permet pas de réaliser de découpes de formes complexes compte tenu du nombre limité de degrés de liberté, ni d'effectuer ces découpes à partir d'un gabarit.

La présente invention vise à remédier à ces inconvénients en fournissant un appareil pour la découpe de blocs de mousse permettant une excellente reproductibilité des formes d'un gabarit, y compris de formes complexes telles que des formes tronconiques.

A cet effet, cet appareil du type équipé d'un fil abrasif et possédant un plateau de largeur inférieure à la longueur de coupe de fil, sur lequel est fixé le bloc de mousse à découper, du côté du fil, ce plateau étant associé à des moyens assurant son déplacement en translation dans une direction orthogonale à la ligne de coupe du fil et contenue dans un plan parallèle au plan horizontal contenant la zone de coupe du fil abrasif, et comprenant en outre des moyens assurant son déplacement en translation perpendiculairement au fil de coupe et à la première direction de déplacement du plateau, et son pivotement autour d'un axe correspondant à la première direction, selon laquelle le plateau peut être déplacé en translation, des moyens étant prévus pour assurer la commande synchronisée de ces différents mouvements en fonction de la découpe à réaliser, est caractérisé en ce qu'il comporte une table sur laquelle sont montés le premier plateau ainsi qu'un deuxième plateau, les deux plateaux étant disposés dans un même plan, et décalés longitudinalement, dont le deuxième est actionné en rotation par un vérin dont le corps est fixé sur la table et dont la tige est fixée sur ledit plateau, une bielle assurant la solidarisation en rotation des deux plateaux, une barre portée par un portique solidaire du bâti étant disposée horizontalement, parallèlement à la zone de coupe du fil abrasif et à la même hauteur que cette dernière, à une distance de celle-ci égale à la distance entre les axes de rotation des deux plateaux, le deuxième plateau situé en avant dans le sens du déplacement, c'est-à-dire du côté de la barre, portant un gabarit à la forme de la découpe à effectuer, les deux vérins assurant le déplacement vertical de la table étant des vérins pneumatiques à simple effet et à pression constante, des moyens étant prévus pour assurer la rotation des plateaux en fonction de l'avance du chariot.

L'invention sera bien comprise à l'aide de la description qui suit en référence au dessin schématique annexé représentant, à titre d'exemple non limitatif, une forme d'exécution de cette machine:

Figure 1 en est une vue en perspective au repos;

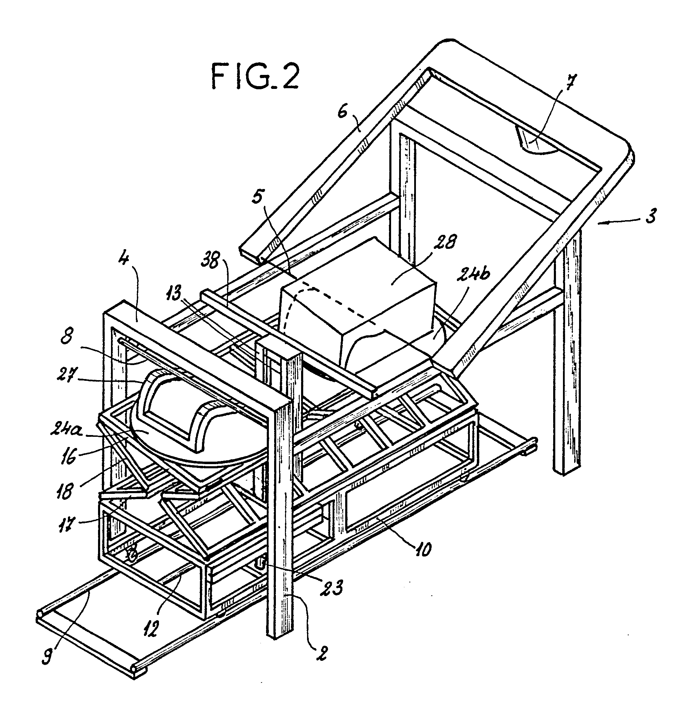

Figure 2 en est une vue en perspective, lors de la découpe d'un bloc de mousse;

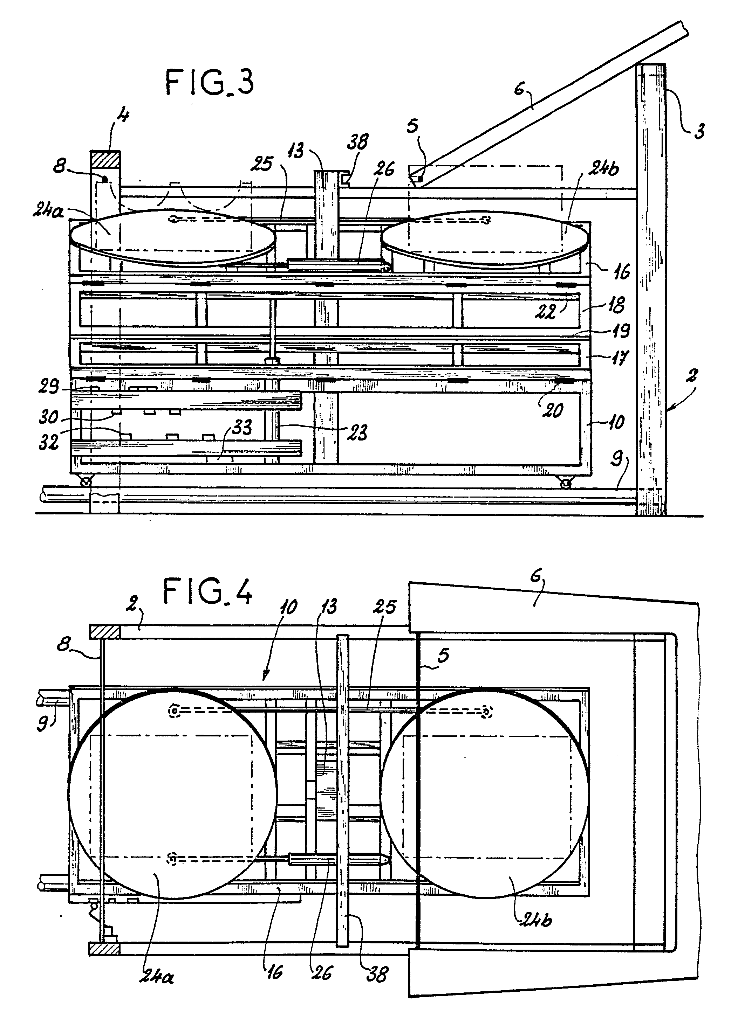

Figure 3 en est une vue de côté;

Figure 4 en est une vue de dessus;

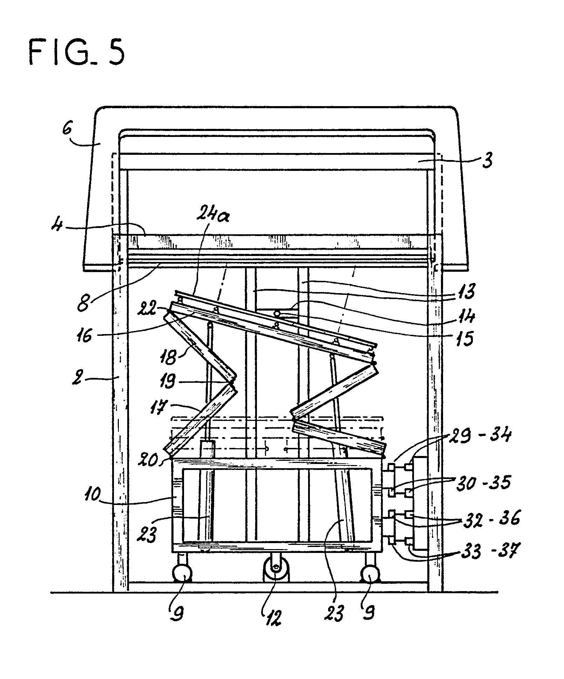

Figure 5 en est une vue de face en conditions d'utilisation.

La machine représentée au dessin comprend un bâti (2) fixé au sol, supportant notamment deux portiques, respectivement (3) et (4) parallèles et décalés longitudinalement. Le premier portique sert au montage d'un fil abrasif (5) monté à l'intérieur d'un carter (6) et entraîné par un moteur électrique (7). Le second portique (4) sert au montage d'une barre (8) horizontale, parallèle à la partie coupante du fil (5), et disposée à la même hauteur que celle-ci.

A l'intérieur du bâti sont fixés sur le sol deux rails (9) servant au déplacement d'un chariot (10), actionné en mouvement par un vérin hydraulique (12) à double effet. Sur le chariot sont montées deux glissières centrales (13) disposées dans un plan perpendiculaire à la direction d'avance du chariot. Ces glissières verticales (13) servent au montage d'un coulisseau (14) portant un axe longitudinal et horizontal (15) permettant le tourillonnement d'une table (16). Cette table est également montée sur le chariot (10) avec interposition de deux séries de panneaux (17, 18), disposées de part et d'autres d'un plan médian longitudinal de l'appareil, symétriques par rapport audit plan. Les panneaux (17) et (18) d'une même série sont articulés l'un sur l'autre autour d'un axe (19) horizontal et longitudinal, tandis que les panneaux (17) sont articulés à leur autre extrémité autour d'un axe (20) horizontal et longitudinal sur le chariot et que les panneaux (18) sont articulés, à leur autre extrémité, autour d'un axe (22) horizontal et longitudinal sur la table (16).

Le mouvement de déplacement vertical de la table (16) relativement au chariot est obtenu par l'intermédiaire de deux vérins pneumatiques (23) disposés de part et d'autre du plan médian longitudinal de l'appareil, dont le corps est fixé sur le chariot et dont l'extrémité libre de la tige est fixée sur la table. Ces vérins pneumatiques sont à simple effet et à pression constante.

La table (16) porte deux plateaux (24) d'axes perpendiculaires à la table (16), décalés longitudinalement l'un par rapport à l'autre, de telle sorte que leur entraxe corresponde à la distance entre la zone de coupe du fil (5) et la barre (8) associée au portique (4).

Les deux plateaux (24) sont solidarisés en rotation par une barre de liaison (25), l'entraînement en rotation des deux plateaux étant obtenu par un vérin (26) dont le corps est fixé sur le chariot (10) et dont l'extrémité de la tige est fixée sur l'un des plateaux.

Le plateau (24a) situé le plus en avant dans le sens de déplacement du chariot est équipé de moyens de fixation d'un gabarit (27), tandis que le plateau (24b) situé en arrière est équipé de moyens de fixation du bloc de mousse (28) à découper.

Le chariot porte quatre séries de pions, respectivement (29, 30, 32 et 33) destinés à coopérer avec des contacts, respectivement (34, 35, 36 et 37) solidaires du bâti. L'actionnement des contacts (34) assure la mise en rotation dans un sens du plateau, l'actionnement des contacts (35) assure l'arrêt de l'avance du chariot pendant une certaine durée de temps, l'actionnement des contacts (36) assure la rotation inverse du plateau, et l'actionnement du contact (37) qui est un contact en fin de course provoque l'arrêt du chariot, la descente de la table et le retour en position initiale du chariot.

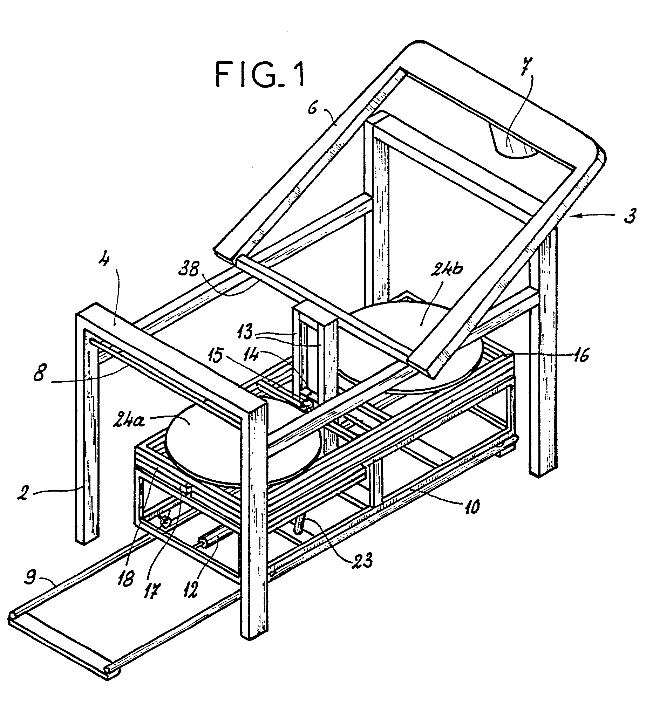

D'un point de vue pratique, le bloc de mousse (28) est fixé sur le plateau (24b) qui lui est destiné, lorsque l'appareil est dans la position représentée à la figure 1 du dessin annexé, dans laquelle la zone de coupe du fil est occultée par un cache (38) solidaire des glissières centrales (13) du chariot (10). Lors de la mise en marche de l'appareil, le gabarit (27) vient prendre appui contre la barre de reproduction, limitant la montée de la table et provoquant l'inclinaison de celle-ci par rapport à l'horizontale, de telle sorte que la barre de reproduction prenne appui sur le fond de la découpe du gabarit.

Au fur et à mesure de l'avance du chariot, les plateaux (24a) et (24b) sont entraînés en rotation sous l'effet de la coopération des pions (29, 32) et des contacts (34, 36), le chariot pouvant, par instant, être arrêté afin de faciliter une rotation du plateau si cela est nécessaire, par action d'un pion (30) sur le contact (35). En fin de découpe, le pion (33) agissant sur le contact (37) provoque l'arrêt de l'avance du chariot, l'abaissement de la table (16) portant les plateaux (24), et le retour en position de départ du chariot par action du vérin (12).

**Revendications**

1. Appareil pour la découpe de blocs de mousse, du type équipé d'un fil abrasif et possédant un plateau (24b) de largeur inférieure à la longueur de coupe du fil (5), sur lequel est fixé le bloc de mousse (28) à découper, du côté du fil, ce plateau étant associé à des moyens assurant son déplacement en translation dans une direction orthogonale à la ligne de coupe du fil et contenue dans un plan parallèle au plan horizontal contenant la zone de coupe du fil abrasif, et comprenant, en outre, des moyens assurant son déplacement en translation perpendiculairement au fil de coupe et à la première direction de déplacement du plateau, et son pivotement autour d'un axe correspondant à la première direction, selon laquelle le plateau peut être déplacé en translation, des moyens étant prévus pour assurer la commande synchronisée de ces différents mouvements en fonction de la découpe à réaliser, caractérisé en ce qu'il comporte une table (16) sur laquelle sont montés le plateau (24b) ainsi qu'un deuxième plateau (24a), les deux plateaux (24a, 24b) étant disposés dans un même plan, et décalés longitudinalement, dont l'un (24a) est actionné en rotation par un vérin (26) dont le corps est fixé sur la table (16) et dont la tige est fixée sur ledit plateau, une bielle (25) assurant la solidarisation en rotation des deux plateaux, une barre (8) portée par un portique solidaire du bâti étant disposée horizontalement, parallèlement à la zone de coupe du fil abrasif (5) et à la même hauteur que cette dernière, à une distance de celle-ci égale à la distance entre les axes de rotation des deux plateaux, le plateau (24a) situé en avant dans le sens du déplacement, c'est-à-dire du côté de la barre (8), portant un gabarit (27) à la forme de la découpe à effectuer, les deux vérins (23) assurant le déplacement vertical de la table étant des vérins pneumatiques à simple effet et à pression constante, des moyens étant prévus pour assurer la rotation des plateaux en fonction de l'avance du chariot.

2. Appareil selon la revendication 1, caractérisé en ce que le fil de coupe (5) est associé à un portique fixe (3), et sa zone de coupe est horizontale, des rails de guidage horizontaux (9) étant prévus qui, passant sous le portique et orientés orthogonalement au fil de coupe, servent au déplacement, par un vérin (12) à double effet, d'un chariot (10) sur lequel est montée la table (16) déplaçable selon une direction verticale avec possibilité de rotation autour d'un axe horizontal et parallèle aux rails de guidage du chariot.

3. Appareil selon la revendication 2, caractérisé en ce que les moyens de guidage de la table par rapport au chariot sont constitués par deux glissières verticales (13) situées dans un plan perpendiculaire à la direction de déplacement du chariot, entre lesquelles est monté un coulisseau (14) portant lui-même un axe (15) horizontal et parallèle à la direction de déplacement du chariot, sur lequel est montée tourillonnante la table (16) support de plateau, cette dernière étant, en outre, associée au chariot par l'intermédiaire de deux séries de panneaux (17, 18) articulés, disposés symétriquement par rapport au plan médian longitudinal de l'appareil, chaque série comportant deux panneaux (17, 18), articulés l'un sur l'autre et articulés pour l'un (17) sur le chariot et pour l'autre (18) sur la table (16) autour d'axes horizontaux et longitudinaux, deux vérins (23) étant disposés de part et d'autre du plan médian longitudinal de l'appareil, reliant la table et le chariot.

4. Appareil selon l'une quelconque des revendications 1 à 3, caractérisé en ce que les moyens assurant l'entraînement en rotation des plateaux sont constitués par des doigts (29, 32) solidaires du chariot (10) coopérant avec des contacts fixes (34, 36) solidaires du bâti, destinés à commander le mouvement du vérin d'entraînement en rotation des plateaux.

5. Appareil selon l'une quelconque des revendications 1 à 3, caractérisé en ce que la commande en rotation des plateaux est initiée par un palpeur suivant une courbe caractéristique jumelée au gabarit et contenant les informations des rotations en fonction de l'avance.

6. Appareil selon l'une quelconque des revendications 1 à 5, caractérisé en ce qu'il comporte des doigts (30) solidaires du châssis coopérant avec un contact (35) solidaire du bâti pour provoquer l'arrêt pendant un temps déterminé de l'avance du chariot.

7. Appareil selon l'une quelconque des revendications 1 à 6, caractérisé en ce qu'il comporte un contact de fin de course (37), solidaire du bâti, provoquant, en fin de découpe, l'arrêt du chariot, la descente de la table, et le retour du chariot en position de départ.

**Claims**

1. Apparatus for cutting foam blocks, of the type provided with an abrasive wire and having a plate (24b) which is smaller in width than the cutting length of the wire (5) and on which is fixed the foam block (28) to be cut, to the side of the wire, this plate being connected with means for ensuring its displacement in a direction at right-angles to the cutting line of the wire and contained in a plane parallel to the horizontal plane containing the cutting zone of the abrasive wire, and comprising additionally means for ensuring its displacement perpendicular to the cutting wire and to the first direction of displacement of the plate, and its pivoting about an axis corresponding to the first direction in which the plate can be displaced, means being provided to ensure the synchronised control of these different movements depending on the cut to be made, characterised in that it comprises a table (16) on which are mounted the plate (24b) and a second plate (24a), the two plates (24a, 24b) being arranged in the same plane and being spaced longitudinally, of which one (24a) is driven in rotation by a jack (26) the body of which is fixed to the table (16) and the rod of which is fixed to the said plate, a connecting-rod (25) ensuring the connection in rotation of the two plates, a bar (8) supported by a frame integral with the support structure being arranged horizontally, parallel to the cutting zone of the abrasive wire (5) and at the same height as the latter, spaced therefrom at a distance equal to the distance between the axes of rotation of the two plates, the plate (24a) located in front in the direction of displacement, that is to say on the side of the bar (8), supporting a template (27) in the shape of the cut to be made, the two jacks (23) ensuring the vertical displacement of the table being single-action, constant-pressure pneumatic jacks, means being provided to ensure the rotation of the plates depending on the advance of the carriage.

2. Apparatus according to claim 1, characterised in that the cutting wire (5) is associated with a fixed frame (3) and its cutting zone is horizontal, horizontal guide rails (9) being provided which, passing under the frame and oriented at right-angles to the cutting wire, serve for the displacement, by means of a double-action jack (12), of a carriage (10) on which is mounted the table (16) displaceable in a vertical direction with the possibility of rotation about a horizontal axis parallel to the guide rails of the carriage.

3. Apparatus according to claim 2, characterised in that the means for guiding the table with respect to the carriage are formed by two vertical sliding rails (13) located in a plane perpendicular to the direction of displacement of the carriage, between which is mounted a slide (14) itself having a horizontal shaft (15) parallel to the direction of displacement of the carriage, on which is mounted so that it can turn the table (16) supporting the plate, this latter being, in addition, associated with the carriage by means of two sets of hinged panels (17, 18), arranged symmetrically with respect to the longitudinal median plane of the apparatus, each set comprising two panels (17, 18) hinged to each other and the one (17) hinged to the carriage and the other (18) hinged to the table (16) about horizontal and longitudinal axes, two jacks (23) being arranged to each side of the longitudinal median plane of the apparatus, connecting the table to the carriage.

4. Apparatus according to any one of claims 1 to 3, characterised in that the means ensuring the drive in rotation of the plates are formed by fingers (29, 32) integral with the carriage (10) and cooperating with fixed contacts (34, 36) integral with the support structure, designed to control the movement of the jack driving the plates in rotation.

5. Apparatus according to one of claims 1 to 3, characterised in that the control in rotation of the plates is initiated by a sensor in accordance with a characteristic curve twinned to the template and containing the information regarding rotation as a function of advance.

6. Apparatus according to any one of claims 1 to 5, characterised in that it comprises fingers (30) integral with the chassis and cooperating with a contact (35) integral with the support structure to stop the advance of the carriage for a predetermined time.

7. Apparatus according to any one of claims 1 to 6, characterised in that it comprises an end-of-travel contact (37) which is integral with the support structure and, at the end of cutting, causes the carriage to stop, the table to descend and the carriage to return to its start position.

**Patentansprüche**

1. Gerät zum Schneiden von Schaumstoffblöcken mittels eines Sägedrahts mit einem Teller (24b), dessen Breite kleiner ist als die Länge des Sägedrahts (5) und auf dem der mit Hilfe des Sägedrahts (5) zu schneidende Schaumstoffblock (28) fixierbar ist und dem (24b) Mittel zugeordnet sind, durch die er in einer ersten Verschiebungsrichtung senkrecht zur Schneidlinie des Sägedrahts bewegbar ist, wobei diese Verschiebungsrichtung in einer Ebene liegt, die parallel zu der die Schneidzone des Sägedrahts enthaltenden Ebene verläuft, mit Mitteln, die eine Translationsbewegung des Tellers senkrecht zu dem Sägedraht und senkrecht zu der ersten Verschiebungsrichtung sowie seine Verschwenkung um eine der ersten Verschiebungsrichtung entsprechende Achse ermöglichen, sowie mit Mitteln zur synchronen Steuerung der verschiedenen Bewegungen in Abhängigkeit von dem auszuführenden Schnitt, dadurch gekennzeichnet, dass ein Tisch (16) vorgesehen ist, auf dem der genannte Teller (24b) sowie ein zweiter Teller (24a) montiert sind, wobei die beiden Teller (24a, 24b) in derselben Ebene und in Längsrichtung gegeneinander versetzt angeordnet sind, dass einer (24a) der Teller durch einen Hubzylinder (26) mit einer Drehbewegung beaufschlagbar ist, dessen Körper an dem Tisch (16) und dessen Stange an dem Teller fixiert ist, dass die beiden Teller durch eine Pleuelstange (25) drehfest miteinander verbunden sind, dass eine Stange (8) vorgesehen ist, die von einer mit dem Maschinengestell fest verbundenen Brücke getragen und horizontal, parallel zur Schneidzone des Sägedrahts (5) und in derselben Höhe wie dieser in einem Abstand von ihm angeordnet ist, der dem Abstand zwischen den Drehachsen der beiden Teller entspricht, dass der in Verschiebungsrichtung vordere, d. h. auf der Seite der genannten Stange (8) liegende Teller (24a) eine Schablone (27) von der Form des auszuführenden Schnitts trägt, dass zwei die vertikale Bewegung des Tisches bewirkende Hubzylinder (23) einfachwirkende, mit konstantem Druck arbeitende pneumatische Zylinder-Kolbenanordnungen sind, und dass Mittel vorgesehen sind, die eine Drehung der Teller in Abhängigkeit von der Vorwärtsbewegung eines den genannten Tisch tragenden Wagens veranlassen.

2. Gerät nach Anspruch 1, dadurch gekennzeichnet, dass der Sägedraht (5) einer feststehenden Brücke (3) zugeordnet ist und seine Schneidzone horizontal verläuft, dass unter der Brücke hindurchlaufende, senkrecht zu dem Sägedraht orientierte horizontale Führungsschienen (9) vorgesehen sind, die zur Bewegung eines Wagens (10) mittels eines doppeltwirkenden Hubzylinders (12) dienen, und dass auf dem Wagen (10) der genannte Tisch (16) in senkrechter Richtung verschiebbar und um eine horizontale, parallel zu den Führungsschienen des Wagens verlaufende Achse drehbar angeordnet ist.

3. Gerät nach Anspruch 2, dadurch gekennzeichnet, dass die Mittel zur Führung des Tisches relativ zu dem Wagen von zwei vertikalen Gleitschienen (13) gebildet sind, die in einer senkrecht zur Verschiebungsrichtung des Wagens verlaufenden Ebene (13) angeordnet sind und zwischen denen ein Gleitschieber (14) montiert ist, der eine parallel zur Verschiebungsrichtung des Wagens verlaufende horizontale Achse (15) trägt, auf der die Teller tragende Tisch (16) schwenkbar montiert ist, dass der Tisch ausserdem mit dem Wagen über zwei Reihen von gelenkigen Platten (17, 18) verbunden ist, die symmetrisch zur Längsmittelebene des Geräts angeordnet sind, wobei jede dieser Reihen zwei Platten (17, 18) umfasst, die gelenkig miteinander und von denen die eine (17) gelenkig mit dem Wagen und die andere (18) gelenkig mit dem Tisch (16) verbunden sind, wobei die Gelenkachse horizontal und in Längsrichtung verläuft, und dass zu beiden Seiten der Längsmittelebene des Geräts jeweils ein Hubzylinder (23) angeordnet ist, der den Tisch und den Wagen miteinander verbindet.

4. Gerät nach einem der Ansprüche 1 bis 3, dadurch gekennzeichnet, dass die die Drehung der Teller veranlassenden Mittel von fest mit dem Wagen (10) verbundenen Kontaktfingern (29, 32) gebildet sind, die mit mit dem Maschinengestell verbundenen feststehenden Kontakten (34, 36) zusammenwirken, welche zur Steuerung der Bewegung des Hubzylinders für die Drehung der Teller dienen.

5. Gerät nach einem der Ansprüche 1 bis 3, dadurch gekennzeichnet, dass die Drehsteuerung der Teller durch ein Tastorgan initiiert wird, das einer der genannten Schablone zugeordneten charakteristischen Kurve folgt, die die Informationen über die Drehbewegung in Abhängigkeit von der Vorwärtsbewegung enthält.

6. Gerät nach einem der Ansprüche 1 bis 5, dadurch gekennzeichnet, dass an dem Wagen befestigte Kontaktfinger (30) vorgesehen sind, die mit einem an dem Maschinengestell befestigten Kontakt (35) derart zusammenwirken, dass sie die Vorwärtsbewegung des Wagens während einer vorbestimmten Zeit anhalten.

7. Gerät nach einem der Ansprüche 1 bis 6, dadurch gekennzeichnet, dass ein an dem Maschinengestell befestigter, das Wegende kennzeichnender Kontakt (37) vorgesehen ist, der bei Beendigung des Schneidvorgangs das Anhalten des Wagens, das Absenken des Tisches und die Rückkehr des Wagens in seine Ausgangsposition veranlasst.

# FIG. 1

FIG. 2

# FIG.3

# FIG.4

# FIG. 5